# EUROPÄISCHE PATENTSCHRIFT

(11) **EP 1 296 089 B1**
(45) Veröffentlichungstag und Bekanntmachung des Hinweises auf die Patenterteilung: **29.06.2005**
(21) Anmeldenummer: 02020599.3
(22) Anmeldetag: 18.09.2002
(51) Int. Cl.: F16L 37/092, F16L 33/22

(54) **Anschlussvorrichtung für Strömungsmittel-Leitungen**
Connector for for fluid pipes
Dispositif de raccord pour tuyaux pour fluide

(30) Priorität: 19.09.2001 DE 20115436 U
(43) Veröffentlichungstag der Anmeldung: 26.03.2003
(60) Teilanmeldung: 05103012.0
(73) Patentinhaber: Voss Automotive GmbH, 51688 Wipperfürth (DE)
(72) Erfinder: Hester, Hilmar, 51688 Wipperfürth (DE); Kaminski, Volker, 58553 Halver (DE); Hagen, Harald, 51688 Wipperfürth (DE); Salomon-Bahls, Bernd, 58553 Halver (DE)
(74) Vertreter: Patentanwälte Dr. Solf & Zapf

(56) Entgegenhaltungen:
- EP-A- 0 940 620
- DE-C- 10 022 893
- US-A- 5 785 358
- US-A- 5 924 746

## Beschreibung

Die vorliegende Erfindung betrifft eine Anschlußvorrichtung für eine Strömungsmittel-Leitung, bestehend aus einem Aufnahmeteil mit einer Stecköffnung zum Einstecken eines Leitungs-Steckabschnittes und Haltemitteln zum Arretieren des eingesteckten Steckabschnittes in der Stecköffnung nach dem Oberbegriff des Anspruchs 1. Eine derartige Anschlußvorrichtung ist aus EP-A-0 940 620 bekannt.

Eine ähnliche Anschlußvorrichtung bzw. "Steckarmatur" ist beispielsweise durch die DE 100 35 791 A1 bekannt geworden. Bei dieser Vorrichtung kann es in der Praxis - vor allem bei ungünstigen, z. B. engen oder schlecht zugänglichen Einbausituationen - zu Problemen dahingehend kommen, dass der Anwender/Monteur den Steckabschnitt womöglich nicht korrekt, d. h. nicht tief genug einsteckt, ohne dies aber zu bemerken. In der Folge führt dies zu Undichtigkeiten oder sogar zu einem vollständigen Lösen der Leitung nach Beaufschlagung mit dem Strömungs-bzw. Druckmedium.

Der vorliegenden Erfindung liegt die Aufgabe zugrunde, eine gattungsgemäße Anschlußvorrichtung zu schaffen, die eine erhöhte Montage- und Anwendungssicherheit gewährleistet.

Erfindungsgemäß wird dies durch eine Anschlußvorrichtung gemäß Anspruch 1 erreicht.

Das erfindungsgemäße Indikatorelement ermöglicht somit ein sehr sicheres Einstecken, indem der Anwender/Monteur von außen genau erkennt, wann die korrekte Mindest-Steckstellung erreicht ist. Dadurch werden Undichtigkeiten und Funktionsausfälle mit hoher Sicherheit vermieden.

Vorteilhafte Ausgestaltungsmerkmale und weitere Vorteile der Erfindung sind in den Unteransprüchen sowie der folgenden Beschreibung enthalten.

Anhand von mehreren, in der Zeichnung veranschaulichten, bevorzugten Ausführungsbeispielen soll die Erfindung genauer erläutert werden. Dabei zeigen:
- Fig. 1: eine erste Ausführungsform einer Anschlußvorrichtung im Längsschnitt vor dem bzw. beim Einstecken des Steckabschnittes,
- Fig. 2: einen Querschnitt II-II gemäß Fig. 1,
- Fig. 3: eine Ansicht analog zu Fig. 1, jedoch in der Mindest-Steckstellung,
- Fig. 4: einen Querschnitt IV-IV gemäß Fig. 3,
- Fig. 5: eine gesonderte Darstellung eines Indikatorelementes in einer axialen Ansicht entsprechend Pfeilrichtung V gemäß Fig. 1 bzw. 6,
- Fig. 6: einen Schnitt durch das Indikatorelement in der Ebene VI-VI gemäß Fig. 5,
- Fig. 7: einen Querschnitt in der Ebene VII-VII gemäß Fig. 6,
- Fig. 8: einen Längsschnitt durch eine zweite Ausführungsform einer Anschlußvorrichtung, wobei in der linken Hälfte (Fig. 8a) die Mindest-Steckstellung und in der rechten Figurenhälfte (Fig.8b) der Zustand vor Erreichen der Mindest-Steckstellung veranschaulicht sind,
- Fig. 9: eine gesonderte Längsschnittdarstellung eines zusätzlichen Zwischenelementes zur Betätigung des Indikatorelementes,
- Fig. 10: eine gesonderte Schnittansicht des Indikatorelementes entsprechend der Ansicht gemäß Fig. 8 (Schnitt X-X gemäß Fig. 11),
- Fig. 11: eine axiale Ansicht in Pfeilrichtung XI gemäß Fig. 10,
- Fig. 12: einen Querschnitt in der Ebene XII-XII gemäß Fig. 10,
- Fig. 13: einen Halb-Längsschnitt durch eine dritte Ausführungsform einer Anschlußvorrichtung in der Mindest-Steckstellung,
- Fig. 14: eine Ansicht wie in Fig. 13, jedoch vor Erreichen der Mindest-Steckstellung,
- Fig. 15: eine gesonderte Schnittansicht des Indikatorelementes gemäß Fig. 13 und 14 (Schnitt XV-XV gemäß Fig. 16),
- Fig. 16: eine axiale Ansicht in Pfeilrichtung XVI gemäß Fig. 15,
- Fig. 17: einen Querschnitt in der Ebene XVII-XVII gemäß Fig. 15,
- Fig. 18: eine Ausführungsform der erfindungsgemäßen Anschlußvorrichtung in einer Darstellung analog zu Fig. 13,
- Fig. 19: eine weitere Darstellung der Ausführung nach Fig. 18 in der Stellung analog zu Fig. 14 und
- Fig. 20: eine gesonderte Darstellung des Indikatorelementes gemäß Fig. 18 und 19 in einer halbgeschnittenen Seitenansicht.

In den verschiedenen Figuren der Zeichnung sind gleiche Teile stets mit den gleichen Bezugszeichen versehen und brauchen daher in der Regel auch jeweils nur einmal beschrieben zu werden.

Eine erfindungsgemäße Anschlußvorrichtung 1 dient zum schnellen und insbesondere lösbaren Anschluß (mindestens) einer Strömungsmittel- bzw. Druckmittel - Leitung 2 (Rohr- oder Schlauchleitung). Dazu besteht die Anschlußvorrichtung im Wesentlichen aus einem Aufnahmeteil 4 mit (mindestens) einer Stecköffnung 6 zum Einstecken eines Leitungs-Steckabschnittes 8 sowie aus Haltemitteln 10 zum Arretieren des eingesteckten Steckabschnittes 8 in der Stecköffnung 6 in einer abgedichteten Position.

Mit Vorteil ist innerhalb des Aufnahmeteils 4 eine innere, koaxiale Stützhülse 12 angeordnet, die einendig so in dem Aufnahmeteil 4 befestigt ist, dass sie sich zentrisch durch die Stecköffnung 6 erstreckt, um zur radialen Abstützung in den eingesteckten Steckabschnitt 8 einzugreifen. Dadurch kann der Steckabschnitt 8 vorteilhafterweise unmittelbar von einem Ende der Leitung 2 gebildet sein. Es liegt aber im Bereich der Erfindung, den Steckabschnitt 8 als zusätzliches, gesondert mit der Leitung 2 zu verbindendes Einzelteil vorzusehen.

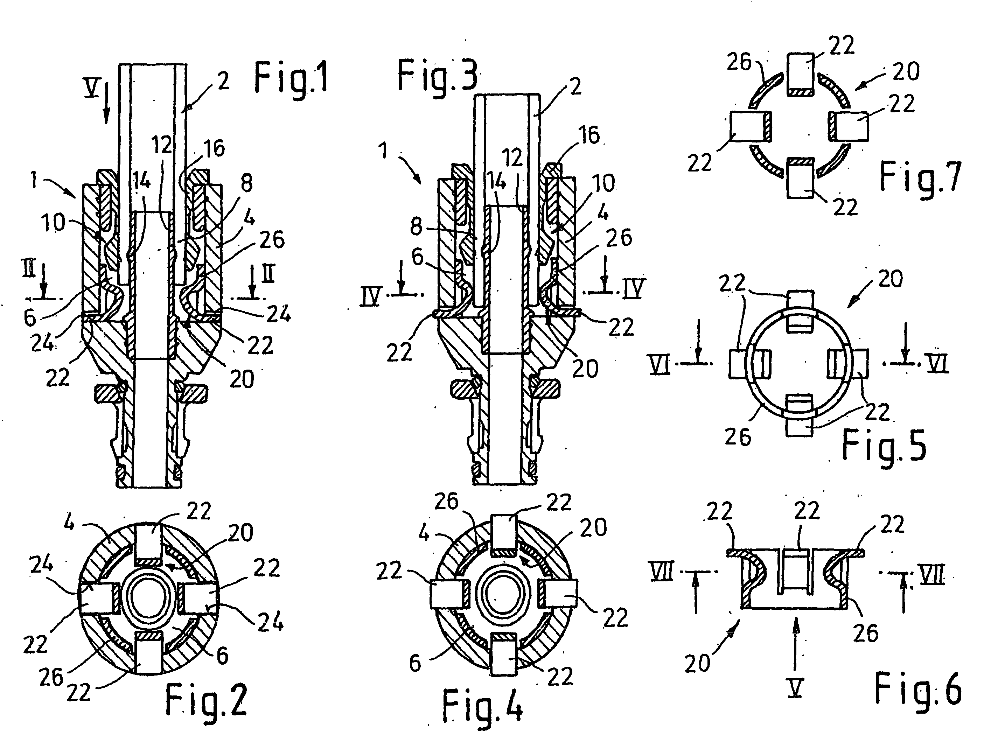

Zur Abdichtung ist bei den dargestellten Ausführungsformen nach Fig. 1 bis Fig. 14 vorgesehen, dass als Dichtmittel die Stützhülse 12 in ihrem in den Steckabschnitt 8 eingreifenden Bereich einen äußeren Ringwulst 14 aufweist. Die zur mechanischen Halterung des eingesteckten Steckabschnittes 8 vorgesehenen Haltemittel 10 können - wie dargestellt - von einem hülsenartigen, den Steckabschnitt 8 umschließenden Spannelement 16 nach Art einer Spannzange bzw. Spannfutters gebildet sein.

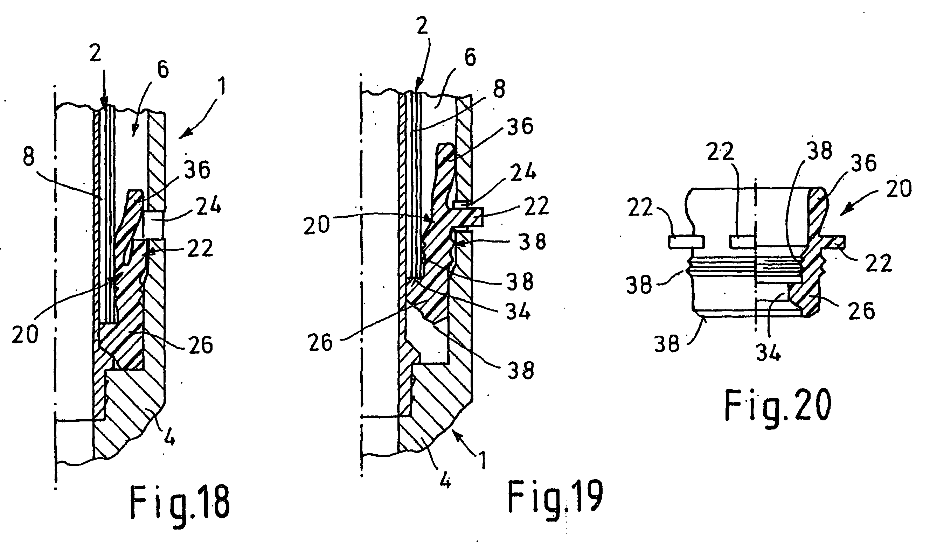

Erfindungsgemäß weist die Anschlußvorrichtung 1 ein Indikatorelement 20 auf. Dieses Indikatorelement 20 ist in der Stecköffnung 6 derart gelagert und dabei derart ausgebildet, dass beim Einstecken des Steckabschnittes 8 bei Erreichen einer bestimmten Mindest-Steckstellung, in der eine hinreichende Arretierung und Abdichtung des Steckabschnittes 8 gewährleistet sind, selbsttätig eine von außen wahrnehmbare Zustandsänderung des Indikatorelementes 20 erfolgt. Dazu ist das Indikatorelement 20 durch das Einstecken des Steckabschnittes 8 verformbar und/oder in seiner Lage veränderbar. Das Indikatorelement 20 weist mindestens einen Kontrollabschnitt 22 auf, der derart beweglich in einer aus der Stecköffnung 6 etwa radial nach außen führenden Queröffnung 22 des Aufnahmeteils 4 angeordnet ist, dass er in einer ersten Stellung mit einem freien Ende die Außenkontur des Aufnahmeteils 4 aus der Queröffnung 24 heraus nach außen überragt. In einer zweiten Stellung liegt der Kontrollabschnitt 22 vollständig innerhalb der Außenkontur des Aufnahmeteils 4, und zwar gänzlich innerhalb der Queröffnung 24 (vgl. Fig. 1, 8a und 13) oder sogar vollständig zurückgezogen innerhalb der Stecköffnung 6 (vgl. dazu Fig. 18).

In den dargestellten Ausführungsbeispielen besteht das Indikatorelement 20 aus einem in der Stecköffnung 6 gelagerten Basisring 26 und insbesondere mehreren, z. B. vier, gleichmäßig über den Umfang verteilt angeordneten Kontrollabschnitten 22. Vorzugsweise ist das Indikatorelement 20 mit dem Basisring 26 und den Kontrollabschnitten 22 als einstückiges Formteil aus einem elastischen Kunststoff-Elastomer ausgebildet.

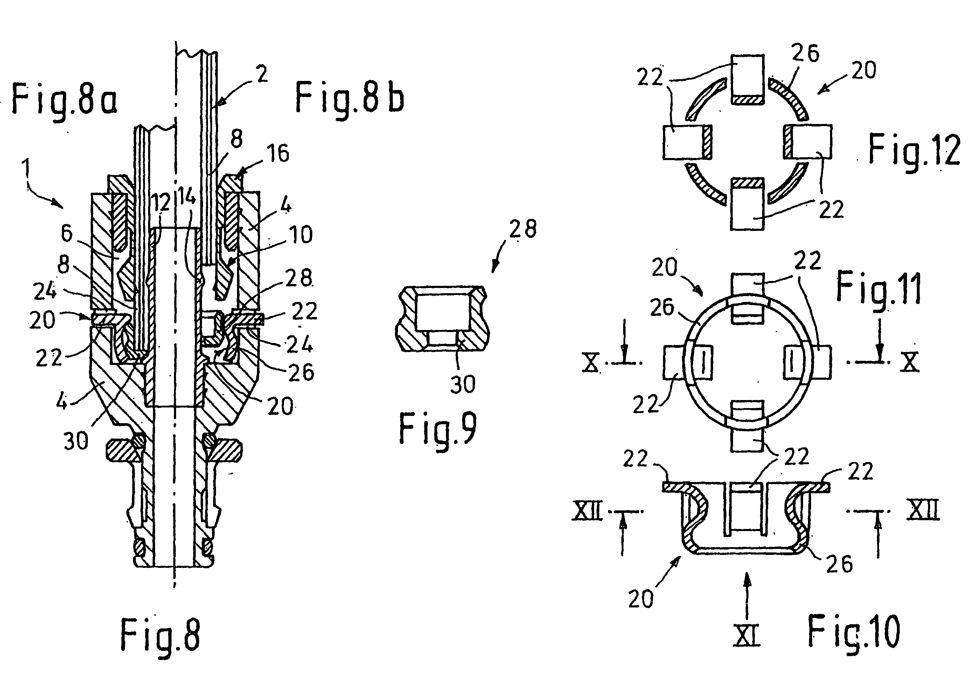

Abgesehen von der Ausführung nach Fig. 8 bis 12 wird das Indikatorelement 20 für seine Zustandsänderung von dem Steckabschnitt 8 unmittelbar betätigt. Gemäß Fig. 8 bis 12 ist ein zusätzliches, ringförmiges Zwischenelement 28 vorgesehen, wobei beim Einstecken des Steckabschnittes 8 das Zwischenelement 28 und über dieses mittelbar das Indikatorelement 20 betätigt wird.

Bei der nicht im Rahmen der Erfindung liegenden Ausführungsform nach Fig. 1 bis 7 sitzt das Indikatorelement 20 über den Basisring 26 zentriert in der Stecköffnung 6. Die Kontrollabschnitte 22 verlaufen ausgehend von dem Basisring 26 derart bogenförmig in jeweils eine der Queröffnungen 24, dass sie vor dem Einstecken des Steckabschnittes 8 mit einem etwa mittleren Abschnitt radial in dem Bereich der Stecköffnung 6 liegen, in den dann der Steckabschnitt 8 eingreift. Auf diese Weise gelangt der Steckabschnitt 8 beim Einstecken unmittelbar zur Anlage an den Kontrollabschnitten 22, so dass diese mit ihren freien Enden radial nach außen durch die Queröffnungen 24 geschoben werden. Somit handelt es sich bei dieser Ausführung nach Fig. 1 bis 7 bei der oben beschriebenen ersten Stellung um eine die Mindest-Steckstellung anzeigende Signalstellung (Fig. 3) und bei der zweiten Stellung um die in Fig. 1 dargestellte Ausgangsstellung vor dem Einstecken des Steckabschnittes 8. In der Signalstellung gemäß Fig. 3 stehen somit die Kontrollabschnitte 22 mit ihren Enden aus den Queröffnungen 24 vor, was zu einer deutlich sichtbaren sowie auch manuell fühlbaren Wahrnehmbarkeit führt.

Bei allen übrigen Ausführungsformen ist eine umgekehrte Variante vorgesehen, wobei die vorstehende erste Stellung die Ausgangsstellung vor einem ersten Einstecken des Steckabschnittes 8 und die zweite Stellung die die Mindest-Steckstellung anzeigende, zurückgezogene Signalstellung sind. Diese Lösung hat den Vorteil, dass in der Gebrauchsstellung die Kontrollabschnitte 22 mit ihren Endkanten nicht aus den Queröffnungen 24 vorstehen. Somit wird durch Vermeidung überstehender Kanten eine erhöhte Unfallsicherheit erreicht.

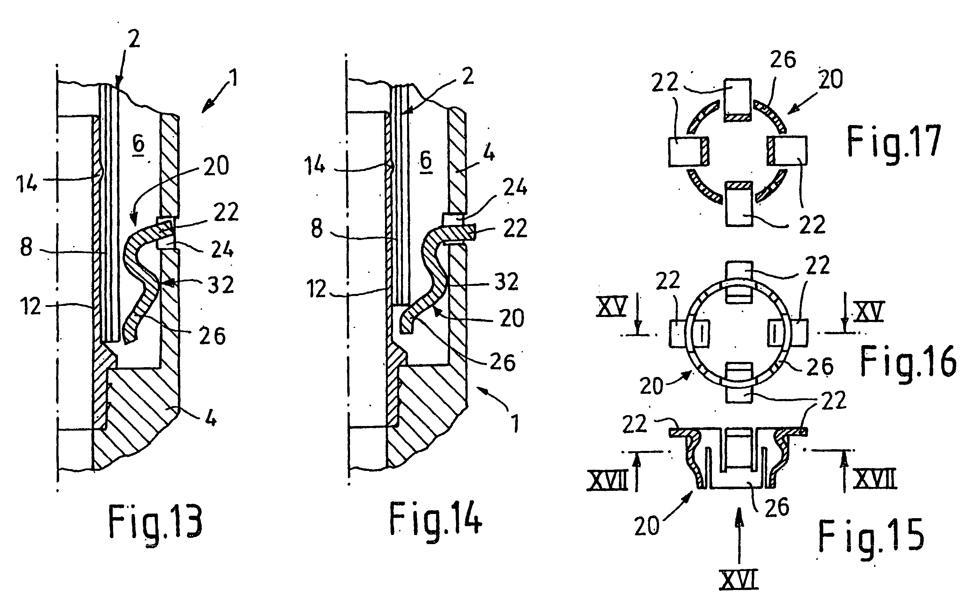

Bei den Ausführungen nach Fig. 1 bis 7 einerseits und Fig. 13 bis 17 andererseits ist das Indikatorelement 20 vorteilhafterweise derart elastisch ausgebildet und/oder derart gelagert, dass es nach einem Lösen und Entnehmen des Steckabschnittes 8 wieder selbsttätig in seine andere Stellung wechselt. Diese Varianten sind somit auch für mehrfaches Stecken bei voll funktionsfähigem Steck-Indikatorelement 20 geeignet, da das Indikatorelement 20 beim Entfernen des Steckabschnittes 8 selbsttätig in die Ausgangsposition zurückfedert.

Bei den übrigen Ausführungen nach Fig. 8 bis 12 und Fig. 18 bis 20 verbleibt das Indikatorelement 20 nach einem Entfernen des Steckabschnittes 8 im Wesentlichen unverändert in seiner Signalstellung und müßte daher für ein wiederholtes Stecken manuell aus der Signalstellung wieder in die steckbereite Ausgangsstellung gebracht werden.

Bei der Ausführung nach Fig. 8 bis 12 sitzt das Indikatorelement 20 ebenfalls zentriert mit dem Basisring 26 in der Stecköffnung 6. Im Bereich der Kontrollabschnitte 22 ist durch die Materialeigenschaften und Formgebung eine radial nach innen gerichtete Vorspannung vorhanden. In der Ausgangsstellung nach Fig. 8b werden aber gegen diese Vorspannung durch das ringförmige Zwischenelement 28 die Kontrollabschnitte 22 in ihrer durch die Queröffnungen 22 nach außen ragenden Stellung gehalten. Wird dann der Steckabschnitt 8 eingesteckt, so gelangt dieser zur Anlage an einem sich radial nach innen erstreckenden Ringsteg 30 des Zwischenelementes 28, so dass bei weiterem Einstecken eine Mitnahme des Zwischenelementes 28 erfolgt. Dadurch werden gemäß Fig. 8a die Kontrollabschnitte 22 freigegeben, so dass sie sich durch die Vorspannung radial nach innen in ihre zurückgezogene Signalstellung bewegen können.

Bei der Variante nach Fig. 13 bis 17 ist das Indikatorelement 20 derart elastisch ausgebildet und geformt, dass in der Ausgangsstellung die Kontrollabschnitte 22 selbsttätig allein durch eine radial nach außen wirkende Vorspannung durch die Queröffnungen 24 nach außen gedrängt werden. Das Indikatorelement 20 sitzt dabei mit einem etwa mittleren; bogenartigen Abschnitt 32 zentriert in der Stecköffnung 6. Ausgehend von diesem etwa mittleren Abschnitt 32 erstreckt sich der Basisring 26 schräg radial nach innen, und zwar so weit, dass der eingesteckte Steckabschnitt 8 an dem Basisring 26 zur Anlage gelangen kann. Durch diese Anlage erfolgt beim Einstecken eine Art Verdrehung bzw. Verwindung des Indikatorelementes 20 um den praktisch als Drehpunkt wirkenden mittleren Abschnitt 32, so dass die Kontrollabschnitte 22 aus ihrer Ausgangslage gemäß Fig. 14 in die Signalstellung gemäß Fig. 13 zurückgezogen werden. Diese Bewegung ist durch die Elastizität des Indikatorelementes 20 nach Entnahme des Steckabschnittes 8 vorteilhafterweise reversibel.

Was schließlich noch die erfindungsgemäße Ausführung nach Fig. 18 bis 20 betrifft, so ist dabei das Indikatorelement 20 vorteilhafterweise so ausgebildet, dass es zusätzlich auch eine Dichtungsfunktion zwischen Aufnahmeteil 4 und Steckabschnitt 8 erfüllt. Somit handelt es sich um ein "Multifunktionselement", welches als Profilformteil aus einem elastischen Werkstoff, vorzugsweise aus NBR oder FKM, ausgebildet ist. Gemäß Fig. 20 sind die Kontrollabschnitte 22 als radiale, fingerartige Ansätze an dem Basisring 26 angeformt. Der Basisring 26 weist einen sich radial nach innen erstreckenden Ringsteg 34 zur stirnseitigen Anlage des Steckabschnittes 8 auf. In der Ausgangsstellung nach Fig. 19 sitzt dieses Indikatorelement 20 unter leichter Vorspannung so in einem Bereich der Stecköffnung 6, dass sich die Kontrollabschnitte 22 geradlinig radial nach außen durch die Queröffnungen 24 erstrecken. Wird dann gemäß Fig. 18 der Steckabschnitt 8 eingesteckt, so wird durch stirnseitige Anlage an dem Ringsteg 34 das gesamte Indikatorelement 20 mitgenommen, wodurch die Kontrollabschnitte 22 unter elastischer Verformung aus den Queröffnungen 24 nach innen in die Stecköffnung 6 zurückgezogen werden. In dieser Stellung werden vorteilhafterweise auch die Queröffnungen 24 nach innen durch einen Dichtabschnitt 36 verschlossen. Dadurch ist ein wirksamer Schutz gegen Eindringen von Schmutz, Feuchtigkeit und dergleichen gewährleistet. Zudem sitzt der Basisring 26 dichtend zwischen dem Aufnahmeteil 4 und dem Steckabschnitt 8. Dazu ist es zweckmäßig, wenn der Basisring 26 radial innen und/oder außen und/oder an seinem in die Stecköffnung 6 weisenden Stimende Dichtlippen bzw. Dichtkanten 38 aufweist.

In allen Ausführungsformen ist es vorteilhaft, wenn das Indikatorelement 20 zumindest im freien Endbereich jedes Kontrollabschnittes 22 eine sich optisch vom jeweils angrenzenden Außenflächenbereich des Aufnahmeteils 4 unterscheidende Ausgestaltung aufweist, und zwar insbesondere eine gegenüber dem Aufnahmeteil 4 kontrastreiche Farbgebung (beispielsweise sogenannte Signalfarbe). Dadurch wird die optische, visuelle Erkennbarkeit der Signalstellung und der dadurch angezeigten Mindest-Steckstellung noch verbessert.

## Patentansprüche

1. Anschlußvorrichtung für eine Strömungsmittel-Leitung (2), bestehend aus einem Aufnahmeteil (4) mit einer Stecköffnung (6) zum Einstecken eines Leitungs-Steckabschnittes (8) und mit Haltemitteln (10) zum Arretieren des eingesteckten Steckabschnittes (8) in der Stecköffnung (6), sowie mit einem in der Stecköffnung (6) derart gelagerten Indikatorelement (20), dass beim Einstecken des Steckabschnittes (8) bei Erreichen einer bestimmten Mindest-Steckstellung, in der eine hinreichende Arretierung und Abdichtung des Steckabschnittes (8) gewährleistet sind, selbsttätig eine von außen wahrnehmbare Zustandsänderung des Indikatorelementes (20) erfolgt, wobei das Indikatorelement (20) als Ringelement mit einem innerhalb der Stecköffnung (6) gelagerten Basisring (26) und mindestens einem derart beweglich in einer aus der Stecköffnung (6) etwa radial nach außen führenden Queröffnung (24) des Aufnahmeteils (4) angeordneten Kontrollabschnitt (22) ausgebildet ist, dass letzterer in einer ersten Stellung mit einem freien Ende die Außenkontur des Aufnahmeteils (4) nach außen überragt und in einer zweiten Stellung vollständig innerhalb der Außenkontur des Aufnahmeteils (4) liegt, wobei die erste Stellung eine Ausgangsstellung vor einem Einstecken des Steckabschnittes (8) und die zweite Stellung eine die Mindest-Steckstellung anzeigende Signalstellung sind,
**dadurch gekennzeichnet, dass** das Indikatorelement (20) als elastisch verformbares Profilformteil aus einem Elastomer-Werkstoff gebildet und durch das Einstecken des Steckabschnittes derart (8) lageveränderbar und verformbar ist, dass durch eine axiale Mitnahmebewegung des Basisringes (26) der Kontrollabschnitt (22) aus der Ausgangsstellung unter elastischer Verformung aus der Queröffnung (24) in die Sigrialstellung radial nach innen in die Stecköffnung (6) zurückgezogen wird.

2. Anschlußvorrichtung nach Anspruch 1,
**dadurch gekennzeichnet, dass** das Indikatorelement (20) zusätzlich auch als Dichtelement zwischen dem Aufnahmeteil (4) und dem eingesteckten Steckabschnitt (8) ausgebildet ist.

3. Anschlußvorrichtung nach Anspruch 1 oder 2,
**dadurch gekennzeichnet, dass** in der Signalstellung die/jede Queröffnung (24) des Aufnahmeteils (4) durch das Indikatorelement (20) nach innen zu der Stecköffnung (6) hin verschlossen wird.

4. Anschlußvorrichtung nach einem der Ansprüche 1 bis 3,
**dadurch gekennzeichnet, dass** das Indikatorelement (20) für seine Zustandsänderung von dem Steckabschnitt (8) unmittelbar betätigt wird.

5. Anschlußvorrichtung nach einem der Ansprüche 1 bis 4,
**dadurch gekennzeichnet, dass** das Indlkatorelement (20) mehrere sich von dem Basisring (26) weg in jeweils eine Queröffnung (24) des Aufnahmeteils (4) erstreckende Kontrollabschnitte (22) aufweiset.

6. Anschlußvorrichtung nach einem der Ansprüche 1 bis 5,
**dadurch gekennzeichnet, dass** das Indikatorelement (20) derart ausgebildet und/oder gelagert ist, dass es nach einem Lösen des Steckabschnittes (8) im Wesentlichen unverändert in seiner die Mindest-Steckstellung anzeigenden Signalstellung verbleibt.

7. Anschlußvorrichtung nach einem der Ansprüche 1 bis 6,
**dadurch gekennzeichnet, dass** das Indikatorelement (20) zumindest im freien Endbereich des/jedes Kontrollabschnittes (22) eine sich optisch von dem Aufnahmeteil (4) unterscheidende Ausgestaltung, insbesondere eine kontrastreiche Farbgebung aufweist.

8. Anschlußvorrichtung nach einem der Ansprüche 1 bis 7,
**dadurch gekennzeichnet, dass** der Steckabschnitt (8) von einem Ende der Leitung (2) oder von einem zusätzlichen Anschlußteil gebildet ist.

9. Anschlußvorrichtung nach einem der Ansprüche 1 bis 8,
**dadurch gekennzeichnet, dass** innerhalb des Aufnahmeteils (4) in der Stecköffnung (6) eine innere koaxiale Stützhülse (12) zum stützenden Eingriff in den eingesteckten Steckabschnitt (8) angeordnet ist.

## Claims

1. A connecting device for a fluid line (2), comprising a receiving part (4) having a plug opening (6) for plugging in a plug-in line portion (8) and having holding means (10) for arresting the plugged-in plug-in portion (8) in the plug opening (6), and also having an indicator element (20) which is mounted in the plug opening (6) in such a way that the plugging-in of the plug-in portion (8) effects a change in the condition of the indicator element (20) which is automatically noticeable from the outside when a certain minimum plugged-in position ensuring adequate arresting and sealing of the plug-in portion (8) is reached, the indicator element (20) being constructed as a ring element having a base ring (26) mounted within the plug opening (6) and at least one control portion (22) which is movably arranged in a transverse opening (24) leading approximately radially outwards from the plug opening (6) in the receiving part (4) in such a way that, in a first position, it projects outwards over the outer contour of the receiving part (4) by means of a free end and, in a second position, is located completely within the outer contour of the receiving part (4), the first position being a starting position before the plug-in portion (8) is plugged in and the second position being a signal position indicating the minimum plugged-in position, **characterised in that** the indicator element (20) is formed from an elastomeric material as a resiliently deformable profiled part and, as a result of plugging-in the plug-in portion (8), can undergo a change in position and a deformation such that, as a result of an axial carrying movement of the base ring (26), the control portion (22) can, with resilient deformation, be drawn backwards out of the starting position in the transverse opening (24) and radially inwards into the signal position in the plug opening (6).

2. A connecting device according to Claim 1, **characterised in that** the indicator element (20) is additionally constructed as a sealing element between the receiving part (4) and the plugged-in plug-in portion (8).

3. A connecting device according to Claim 1 or 2, **characterised in that**, in the signal position, the/each transverse opening (24) of the receiving part (4) is closed inwardly towards the plug opening (6) by the indicator element (20).

4. A connecting device according to one of Claims 1 to 3, **characterised in that**, for its change in condition, the indicator element (20) is actuated directly by the plug-in portion (8).

5. A connecting device according to one of Claims 1 to 4, **characterised in that** the indicator element (20) has a plurality of control portions (22) extending away from the base ring (26) into a respective transverse opening (24) in the receiving part (4).

6. A connecting device according to one of Claims 1 to 5, **characterised in that** the indicator element (20) is constructed and/or mounted in such a way that, after the plug-in portion (8) has been released, it remains substantially unchanged in its signal position indicating the minimum plugged-in position.

7. A connecting device according to one of Claims 1 to 6, **characterised in that**, at least in the free end region of the/each control portion (22), the indicator element (20) has a design which differs visually from the receiving part (4), particularly a high-contrast coloration.

8. A connecting device according to one of Claims 1 to 7, **characterised in that** the plug-in portion (8) is formed by one end of the line (2) or by an additional connecting part.

9. A connecting device according to one of Claims 1 to 8, **characterised in that**, with-in the receiving part (4), an inner coaxial supporting sleeve (12) is arranged in the plug opening (6) for the purpose of engaging in the plugged-in plug-in portion (8) in supportive manner.

## Revendications

1. Dispositif de raccord pour tuyaux pour fluide (2), consistant en une partie réceptrice (4) avec un orifice pour insertion (6) pour l'insertion d'une partie de raccordement de tuyau (8) et avec des moyens de retenue (10) pour bloquer la partie de raccordement insérée (8) dans l'orifice pour insertion (6), ainsi qu'avec un élément indicateur (20) monté dans l'orifice pour insertion (6) de telle manière que lors de l'insertion de la partie de raccordement (8) à l'atteinte d'une position d'insertion minimale définie dans laquelle un blocage et une étanchéité suffisants de la partie de raccordement (8) sont assurés, une modification d'état de l'élément indicateur (20) pouvant être prise en compte depuis l'extérieur se fait automatiquement, l'élément indicateur (20) étant réalisé en tant qu'élément annulaire avec une bague de base (26) montée à l'intérieur de l'orifice pour insertion (6) et au moins une partie de contrôle (22) agencée de façon mobile dans une ouverture transversale (24) de la partie réceptrice (4) conduisant depuis l'orifice pour insertion (6) quasiment radialement vers l'extérieur de telle sorte que cette partie de contrôle, dans une première position, déborde par une extrémité libre extérieurement à la périphérie externe de la partie réceptrice (4) et, dans une seconde position, soit située complètement à l'intérieur de la périphérie externe de la partie réceptrice (4), la première position étant une position de sortie avant une insertion de la partie de raccordement (8) et la seconde position une position de signalisation affichant la position d'insertion minimale, **caractérisé en ce que** l'élément indicateur (20) est formé en tant que partie profilée déformable élastiquement à partir d'un matériau élastomère et peut avoir sa position de montage modifiée moyennant l'insertion de la partie de raccordement (8) et peut être déformée, de telle sorte que, moyennant un déplacement d'entraînement axial de la bague de base (26), la partie de contrôle (22) soit, à partir de la position de sortie, retirée sous un effet de déformation élastique à partir de l'ouverture transversale (24) dans la position de signalisation, radialement vers l'intérieur dans l'orifice pour insertion (6).

2. Dispositif de raccord selon la revendication 1, **caractérisé en ce que** l'élément indicateur (20) est en outre également réalisé en tant qu'élément d'étanchéité entre la partie réceptrice (4) et la partie de raccordement insérée (8).

3. Dispositif de raccord selon la revendication 1 ou 2, **caractérisé en ce que**, dans la position de signalisation, chaque dite ouverture transversale (24) de la partie réceptrice (4) est refermée moyennant l'élément indicateur (20) vers l'intérieur en rapprochement de l'orifice pour insertion (6).

4. Dispositif de raccord selon l'une quelconque des revendications 1 à 3, **caractérisé en ce que** l'élément indicateur (20) pour son changement d'état est actionné directement par la partie de raccordement (8).

5. Dispositif de raccord selon l'une quelconque des revendications 1 à 4, **caractérisé en ce que** l'élément indicateur (20) comporte plusieurs parties de contrôle (22) s'étendant en éloignement depuis la bague de base (26) dans respectivement une ouverture transversale (24) de la partie réceptrice (4).

6. Dispositif de raccord selon l'une quelconque des revendications 1 à 5, **caractérisé en ce que** l'élément indicateur (20) est réalisé et/ou monté de telle manière que, consécutivement à un largage de la partie de raccordement (8), il demeure essentiellement inchangé dans sa position de signalisation affichant la position d'insertion minimale.

7. Dispositif de raccord selon l'une quelconque des revendications 1 à 6, **caractérisé en ce que** l'élément indicateur (20) comporte au moins en l'extrémité libre de chaque dite partie de contrôle (22) une conception se distinguant visuellement par rapport à la partie réceptrice (4), en particulier une coloration à grand contraste.

8. Dispositif de raccord selon l'une quelconque des revendications 1 à 7, **caractérisé en ce que** la partie de raccordement (8) est formée par une extrémité de tuyau (2) ou par une pièce de raccord supplémentaire.

9. Dispositif de raccord selon l'une quelconque des revendications 1 à 8, **caractérisé en ce qu'**est agencé à l'intérieur de la partie réceptrice (4) dans l'orifice pour insertion (6) un manchon de support coaxial interne (12) destiné à soutenir l'engagement dans la partie de raccordement (8) insérée.
